# EUROPEAN PATENT APPLICATION

(11) **EP 2 608 533 A1**
(43) Date of publication of application: **26.06.2013**
(21) Application number: 12177068.9
(22) Date of filing: 19.07.2012
(51) Int. Cl.: H04N 5/44, H04N 5/445

(54) **Operation control apparatus and operation control method**

(30) Priority: 22.12.2011 JP 2011281116
(71) Applicant: Kabushiki Kaisha Toshiba, Tokyo 105-8001 (JP)
(72) Inventor: Kimura, Takahiro, Tokyo, 105-8001 (JP)
(74) Representative: Henkel, Breuer & Partner

(57) **Abstract**

According to one embodiment, an operation control apparatus includes a memory (68), an update module (65), and a controller (65). The memory is configured to store a plurality of items of registration information each including user specifying information, an age, and an age update date. The update module is configured to update an age included in first registration information based on an age update date included in the first registration information. The controller is configured to control a parental lock operation based.on an updated age included in the first registration information after first user specifying information included in the first registration information is input.

## Description

Embodiments described herein relate generally to an operation control apparatus and operation control method.

A digital television which operates according to user settings is known. This digital television stores a plurality of operation modes which are set in correspondence with a plurality of users. For example, the digital television operates according to an operation mode (a volume, image quality, and recorded program list, which are designated in advance) of a first user in response to selection of the operation mode of the first user.

Also, a digital television having a parental lock function is known. This digital television stores viewable age settings, allows playback of a parentally locked program for an age less than the set viewable age, and does not allow playback of a parentally locked program for an age not less than the set viewable age.

The age of the user is added year by year, but the viewable age set in the digital television is fixed. In order to adapt to the actual age of the user, the user has to periodically update the viewable age set in the digital television.

A general architecture that implements the various features of the embodiments will now be described with reference to the drawings. The drawings and the associated descriptions are provided to illustrate the embodiments and not to limit the scope of the invention.
FIG. 1 is a schematic block diagram showing an example of the arrangement of a digital television broadcast receiver (operation control apparatus) according to an embodiment;
FIG. 2 is a view showing a display example of a mode selection screen according to the embodiment;
FIG. 3A is a table showing an example of respective user modes according to the embodiment;
FIG. 3B is a flowchart showing an example of playback control of parentally locked programs according to the embodiment;
FIG. 4A is a table showing an example of respective user modes (with an automatic update function of an age) according to the embodiment; and
FIG. 4B is a flowchart showing an example of playback control (that corresponding to the automatic update function of an age) of parentally locked programs according to the embodiment.

Various embodiments will be described hereinafter with reference to the accompanying drawings.

In general, according to one embodiment, an operation control apparatus includes a memory (68), an update module (65), and a controller (65). The memory is configured to store a plurality of items of registration information each including user specifying information, an age, and an age update date. The update module is configured to update an age included in first registration information based on an age update date included in the first registration information. The controller is configured to control a parental lock operation based on an updated age included in the first registration information after first user specifying information included in the first registration information is input.

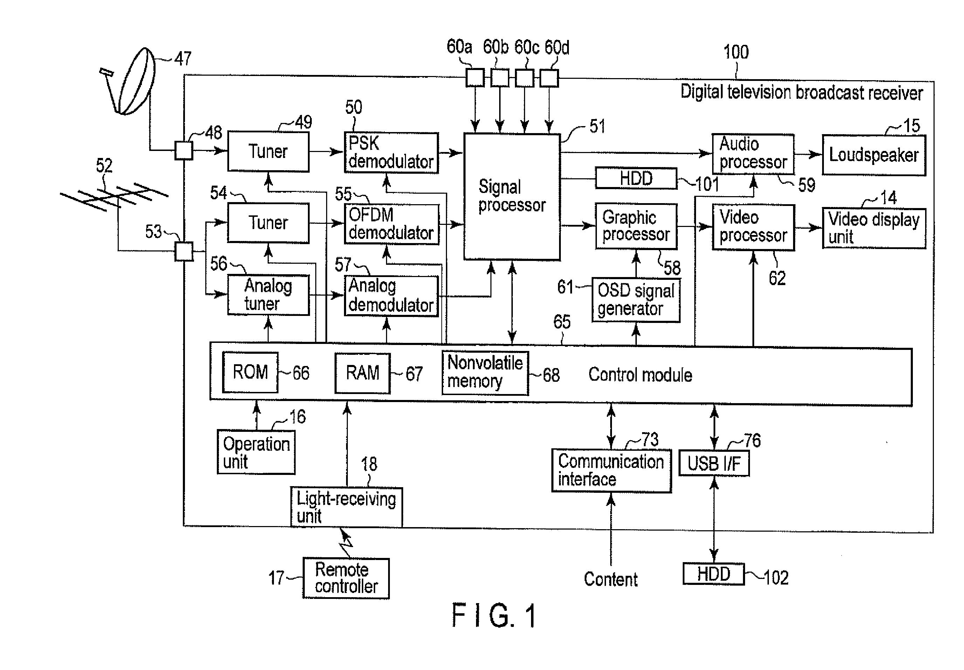

FIG. 1 is a schematic block diagram showing an example of the arrangement of a digital television broadcast receiver (operation control apparatus) according to an embodiment. This embodiment will explain an operation control apparatus which includes a video display unit 14, but the video display unit 14 is not indispensable for the operation control apparatus. For example, when the operation control apparatus is a digital recorder, digital player, or the like, it does not include any video display unit 14, and outputs display information to an external video display unit via an HDMI cable or the like.

A digital television broadcast receiver 100 will be described below with reference to FIG. 1. As shown in FIG. 1, a satellite digital television broadcast signal, which is received by a DBS digital broadcast receiving antenna 47, is supplied to a satellite digital broadcast tuner 49 via an input terminal 48, and the tuner 49 tunes a broadcast signal of a designated channel.

The broadcast signal tuned by this tuner 49 is supplied to a phase-shift keying (PSK) demodulator 50, and is demodulated to obtain a digital video signal and audio signal, which are then output to a signal processor 51.

A terrestrial digital television broadcast signal, which is received by a terrestrial broadcast receiving antenna 52, is supplied to a terrestrial digital broadcast tuner 54 via an input terminal 53, and the tuner 54 tunes a broadcast signal of a designated channel.

The broadcast signal tuned by this tuner 54 is supplied to an orthogonal frequency division multiplexing (OFDM) demodulator 55, and is demodulated to obtain a digital video signal and audio signal, which are then output to the signal processor 51.

A terrestrial analog television broadcast signal, which is received by the terrestrial broadcast receiving antenna 52, is supplied to a terrestrial analog broadcast tuner 56 via the input terminal 53, and the tuner 56 tunes a broadcast signal of a designated channel. The broadcast signal tuned by this tuner 56 is supplied to an analog demodulator 57, and is demodulated to obtain an analog video signal and audio signal, which are then output to the signal processor 51.

The signal processor 51 selectively applies predetermined digital signal processing to the digital video and audio signals respectively supplied from the PSK demodulator 50 and OFDM demodulator 55, and outputs the processed signals to a graphic processor 58 and audio processor 59.

To the signal processor 51, a plurality (four in FIG. 1) of input terminals 60a, 60b, 60c, and 60d are connected. These input terminals 60a to 60d allow to respectively input analog video and audio signals from a device outside the digital television broadcast receiver 100.

The signal processor 51 selectively converts the analog video and audio signals respectively supplied from the analog demodulator 57 and input terminals 60a to 60d into digital video and audio signals, applies predetermined digital signal processing to the digital video and audio signals, and then outputs these signals to the graphic processor 58 and audio processor 59.

Of these processors, the graphic processor 58 has a function of superimposing an on-screen display (OSD) signal generated by an OSD signal generator 61 on the digital video signal supplied from the signal processor 51, and outputting that signal. This graphic processor 58 can selectively output the output video signal of the signal processor 51 and the output OSD signal of the OSD signal generator 61, or can combine and output these outputs.

The digital video signal output from the graphic processor 58 is supplied to a video processor 62. The video signal processed by the video processor 62 is supplied to the video display unit 14, and also to an output terminal. The video display unit 14 displays an image based on the video signal. When an external device is connected to the output terminal, the video signal supplied to the output terminal is input to the external device.

The audio processor 59 converts the input digital audio signal into an analog audio signal which can be played back by a loudspeaker 15, and outputs the analog audio signal to the loudspeaker 15 to output a sound and also externally outputs it via an output terminal.

Note that a control module 65 of the digital television broadcast receiver 100 integrally controls all processes and operations including the aforementioned signal processes and the like. The control module 65 includes a central processing unit (CPU) and the like. The control module 65 controls respective units based on operation information from an operation unit 16 or that which is output from a remote controller 17 and is received by a light-receiving unit 18, so as to reflect the operation contents.

In this case, the control module 65 mainly uses a read-only memory (ROM) 66 which stores control programs executed by the CPU, a random access memory (RAM) 67 which provides a work area to the CPU, and a nonvolatile memory 68 which stores various kinds of setting information, control information, and the like.

The control module 65 can exchange information via a communication interface 73. For example, the control module 65 can control reception (playback) of a content (parentally locked program) delivered from a server via the communication interface 73. The reception (playback) control of a parentally locked program will be described later.

Furthermore, the control module 65 can exchange information with a USB-compatible device (for example, an external HDD 102) via a USB interface 76.

Moreover, the control module 65 refers to video recording reservation information included in a program recording reservation list stored in the nonvolatile memory 68, and controls a video recording operation of a content (program) based on a reception signal. As a video recording destination, for example, an internal HDD 101, an external HDD 102 connected via a USB terminal 24, and a hard disk recorder, DVD recorder, or Blu-ray recorder connected via an HDMI terminal are available.

For example, the control module 65 controls recording of parentally locked programs in the internal HDD 101 or external HDD 102, and controls playback of parentally locked programs recorded in the internal HDD 101 or external HDD 102. The recording control and playback control of parentally locked programs will be described later. An example of operation control by the digital television broadcast receiver 100 (control module 65) will be described below.

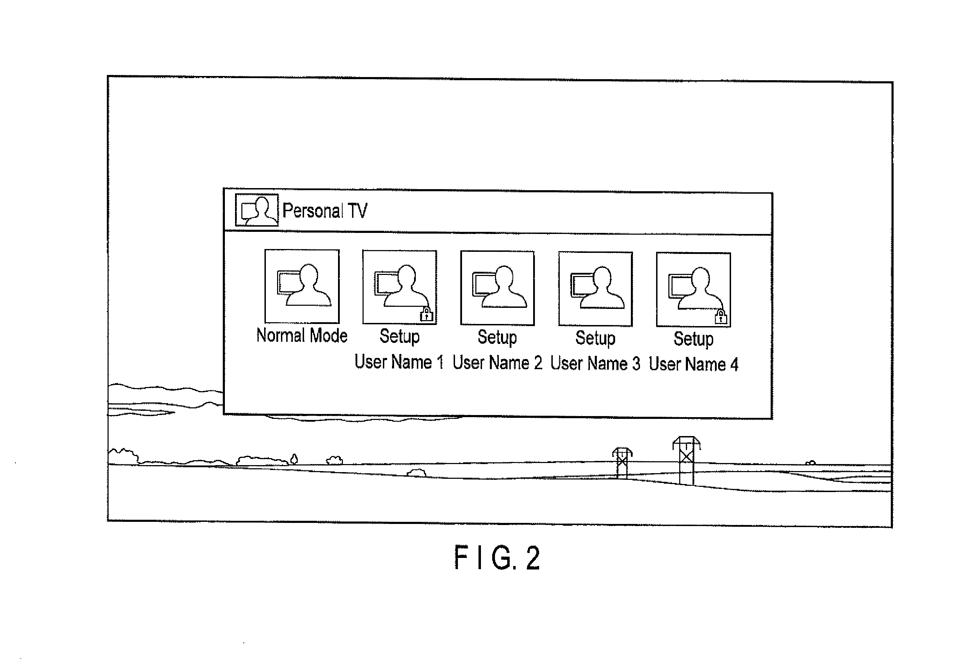

For example, the digital television broadcast receiver 100 includes a normal mode and one or more user modes (one or more operation modes), and displays a mode selection screen. FIG. 2 shows a display example of the mode selection screen. As shown in FIG. 2, the mode selection screen includes a plurality of icons corresponding to the normal mode, and first, second, third, and fourth user modes (User Names 1, 2, 3, and 4). The digital television broadcast receiver 100 sets the normal mode or one of the first, second, third, and fourth user modes in accordance with a user's selection operation. Note that when user specifying information is set in association with each user mode, the digital television broadcast receiver 100 can set the user mode under a condition of input of correct user specifying information, as will be described later. If no user specifying information is set in association with each user mode, the digital television broadcast receiver 100 can set the user mode by an icon selection operation or the like.

The digital television broadcast receiver 100 can set a user mode in response to user registration from the operation unit 16 or remote controller 17. For example, the user can input first registration information including a user name, user specifying information, age, and age update date (birthday) via the operation unit 16 or remote controller 17. Furthermore, the user can input the first user mode (first operation mode) in association with the first registration information via the operation unit 16 or remote controller 17. In response to this, the nonvolatile memory 68 stores the first registration information, and also the first user mode associated with the first registration information.

Likewise, the user can input second registration information, third registration information, and fourth registration information via the operation unit 16 or remote controller 17. In response to this, the nonvolatile memory 68 stores the second registration information, third registration information, and fourth registration information, and also the second user mode associated with the second registration information, the third user mode associated with the third registration information, and the fourth user mode associated with the fourth registration information.

The user specifying information includes, for example, a password or PIN code. Alternatively, user's face image information (image feature information) or user's voice information (voice feature information) may be used. When first user specifying information included in the first registration information is a password, the control module 65 compares an input password, which is input via the operation unit 16 or remote controller 17, with the first user specifying information (password) included in the first registration information to authenticate the user. When the first user specifying information included in the first registration information is face image information (image feature information), the control module 65 compares face image information (image feature information), which is captured by a camera, with the first user specifying information (face image information [image feature information]) included in the first registration information to authenticate the user. When the first user specifying information included in the first registration information is voice information (voice feature information), the control module 65 compares voice information (voice feature information), which is acquired via a microphone, with the first user specifying information (voice information [voice feature information]) included in the first registration information to authenticate the user.

Note that the user specifying information is arbitrarily set, and may not be set. For example, an icon of the first user mode (User Name 1) on the mode selection screen shown in FIG. 2 includes a key icon, so as to indicate that the first user specifying information is set for the first user mode. That is, the first user specifying information is set in the first registration information associated with the first user mode. Likewise, an icon of the fourth user mode (User Name 4) includes a key icon, so as to indicate that the fourth user specifying information is set for the fourth user mode.

On the other hand, an icon of the second user mode (User Name 2) on the mode selection screen shown in FIG. 2 does not include any key icon, so as to indicate that no user specifying information is set for the second user mode. That is, no user specifying information is set in the second registration information associated with the second user mode. Likewise, an icon of the third user mode (User Name 3) does not include any key icon, so as to indicate that no user specifying information is set for the third user mode.

For example, when the first user specifying information is set for the first user mode, and the user selects the icon corresponding to the first user mode on the mode selection screen via the operation unit 16 or remote controller 17, the control module 65 prompts the user to input the first user specifying information associated with the first user mode. When the user inputs the first user specifying information associated with the first user mode via the operation unit 16 or remote controller 17, the control module 65 sets the first user mode in response to the input of the first user specifying information associated with the first user mode. In other words, the control module 65 changes the already set user mode to the first user mode in response to the input of the first user specifying information.

For example, when no user specifying information is set for the second user mode, and the user selects the icon corresponding to the second user mode on the mode selection screen via the operation unit 16 or remote controller 17, the control module 65 sets the second user mode in response to the selection of the icon. In other words, the control module 65 changes the already set user mode to the second user mode in response to the selection of the icon.

For example, the first user mode includes a volume, image quality, recorded program list, program recording reservation list, and channel list, which are designated in advance. Likewise, the second user mode includes a volume, image quality, recorded program list, program recording reservation list, and channel list, which are designated in advance.

When the user selects the icon of the first user mode and inputs the first user specifying information (password), the control module 65 compares the input password with the first user specifying information (password) included in the first registration information. When the user authentication has succeeded, the control module 65 sets the first user mode associated with the first registration information, and controls operations based on the first user mode. That is, the control module 65 plays back a program to have a volume and image quality (playback condition) designated in the first user mode in response to a playback operation of the program. Also, the control module 65 outputs (displays) a recorded program list designated by the first user mode in response to an output request (display request) of the recorded program list. Furthermore, the control module 65 outputs (displays) a program recording reservation list designated by the first user mode in response to an output request (display request) of the program recording reservation list. Moreover, the control module 65 outputs (displays) a channel list designated by the first user mode in response to an output request (display request) of the channel list.

When the second user mode is set, the control module 65 controls operations based on the second user mode. That is, the control module 65 plays back a program to have a volume and image quality (playback condition) designated in the second user mode in response to a playback operation of the program. Also, the control module 65 outputs (displays) a recorded program list designated by the second user mode in response to an output request (display request) of the recorded program list. Furthermore, the control module 65 outputs (displays) a program recording reservation list designated by the second user mode in response to an output request (display request) of the program recording reservation list. Moreover, the control module 65 outputs (displays) a channel list designated by the second user mode in response to an output request (display request) of the channel list.

As described above, the nonvolatile memory 68 stores the plurality of items of registration information, stores the plurality of user modes corresponding to these plurality of items of registration information, and further stores the normal mode. The normal mode includes a default volume, default image quality, default recorded program list, default program recording reservation list, and default channel list.

An age automatic update function will be described below. The digital television broadcast receiver 100 can obtain current date and time information via a broadcast signal. Alternatively, the digital television broadcast receiver 100 can obtain current date and time information via the communication interface 73. The control module 65 updates an age (initially set age) included in the first registration information based on the current date and time information and an age update date included in the first registration information. After the update processing, the first registration information may hold the updated age in place of the age (initially set age), or it may hold the age (initially set age) and updated age.

For example, assume that the age included in the first registration information is 17 years old, and the age update date (birthday) included in the first registration information is 12/1. The control module 65 updates 17 years old to 18 years old at an update detection timing from 2011/11/30/23/59/59 to 2011/12/1/00/00/00 based on the current date and time information.

For example, when the first user specifying information is set in the first registration information associated with the first user mode, the first user specifying information set in the first registration information is required to be input to set and change the first registration information. That is, the first user specifying information set in the first registration information is required to be input to set and change the age included in the first registration information. Thus, the age included in the first registration information cannot be changed without notice.

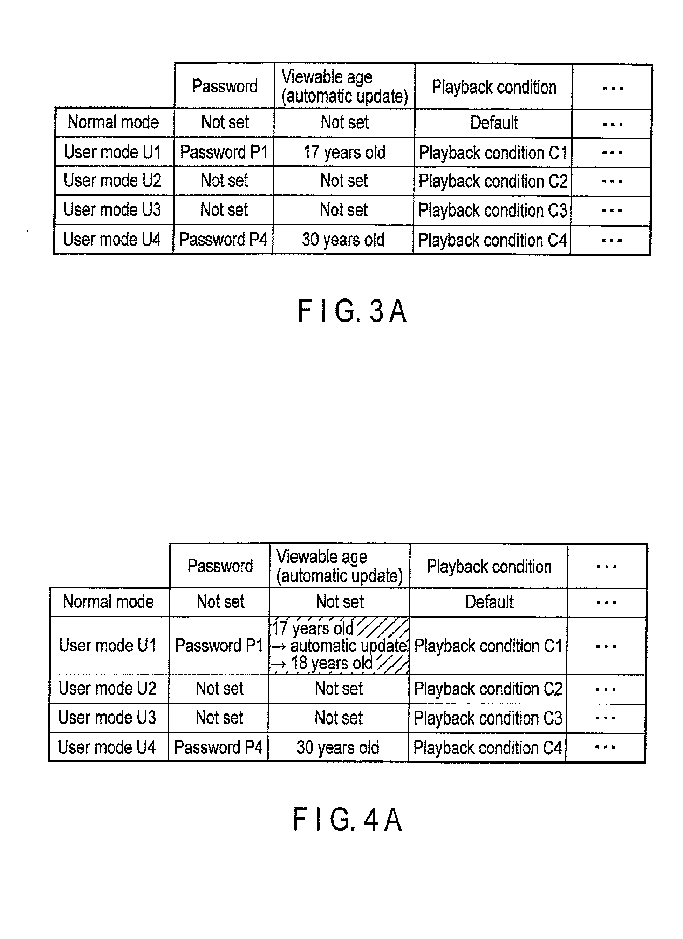

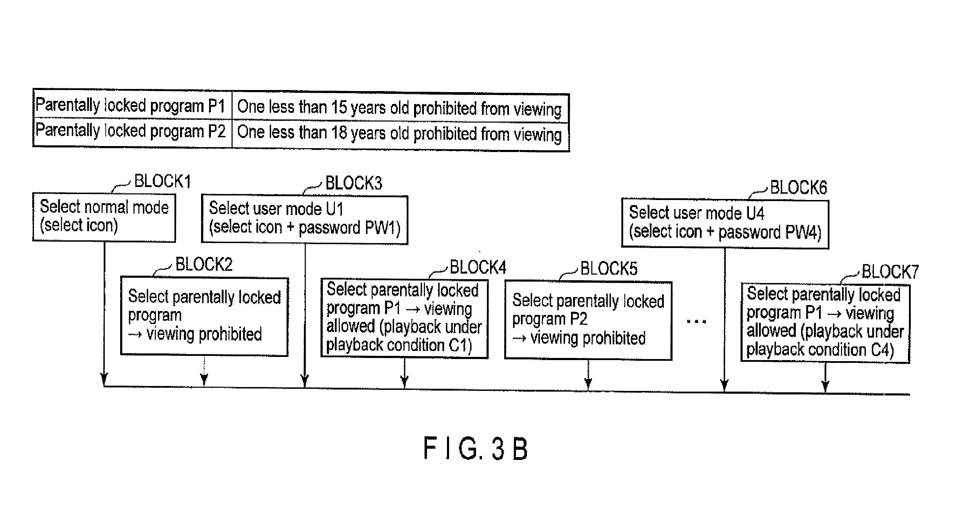

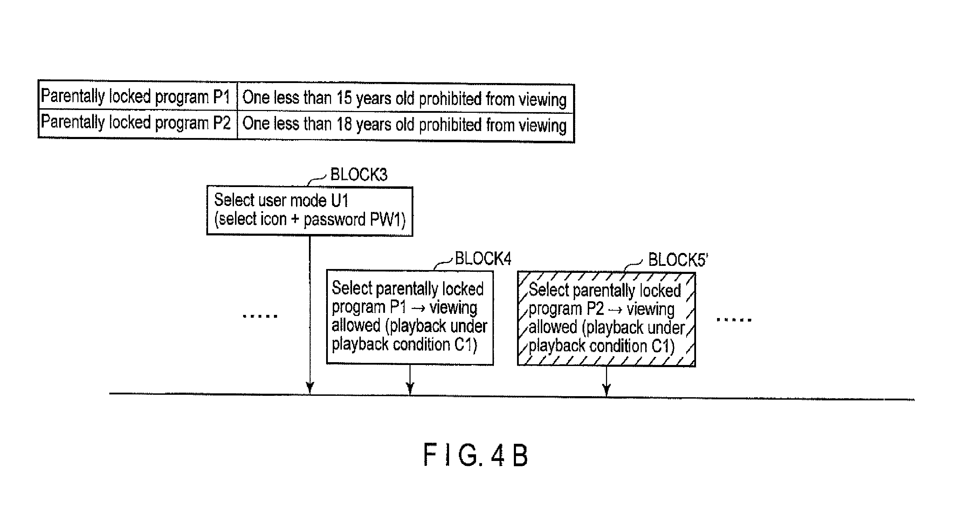

Parental lock operation control will be described below with reference to FIGS. 3A, 3B, 4A, and 4B. For example, an example of operation control (playback control) will be described under the assumption of a first parentally locked program (parentally locked program P1) which cannot be viewed by a user less than 15 years old, and second parentally locked program (parentally locked program P2) which cannot be viewed by a user less than 18 years old. Note that the digital television broadcast receiver 100 can receive an electronic program guide via a broadcast signal, and can display the electronic program guide. Also, the digital television broadcast receiver 100 can receive an electronic program guide via the communication interface 73.

Also, the normal mode, first user mode (user mode U1), second user mode (user mode U2), third user mode (user mode U3), and fourth user mode (user mode U4) will be assumed, as shown in FIG. 3A.

When the user selects the icon of the normal mode from the mode selection screen shown in FIG. 2 via the operation unit 16 or remote controller 17, the control module 65 sets the normal mode (BLOCK 1 in FIG. 3B). Since no user specifying information (password) is set for the normal mode, the user can set the normal mode without inputting any user specifying information (password).

When the user selects the first parentally locked program to be viewed from the electronic program guide via the operation unit 16 or remote controller 17 while the digital television broadcast receiver 100 is set in the normal mode, the control module 65 does not allow playback (a playback operation) of the first parentally locked program. Hence, even when the user selects the first parentally locked program to be viewed, the first parentally locked program is neither played back nor displayed (BLOCK 2 in FIG. 3B). Likewise, when the user selects the second parentally locked program to be viewed from the electronic program guide via the operation unit 16 or remote controller 17, the control module 65 does not allow playback (a playback operation) of the second parentally locked program. Note that the same applies to a case in which the user selects the first parentally locked program to be viewed not only from the electronic program guide but also from, for example, the recorded program list.

When the user selects the icon of the first user mode (user mode U1) from the mode selection screen shown in FIG. 2 via the operation unit 16 or remote controller 17, the control module 65 prompts the user to input the first user specifying information (password PW1) associated with the first user mode. When the user inputs the first user specifying information (password PW1) associated with the first user mode via the operation unit 16 or remote controller 17, the control module 65 sets the first user mode in response to the input of the first user specifying information (password PW1) associated with the first user mode (BLOCK 3 in FIG. 3B).

When the user selects the first parentally locked program to be viewed from, for example, the electronic program guide via the operation unit 16 or remote controller 17 while the digital television broadcast receiver 100 is set in the first user mode (set age = 17 years old), that is, in a state after the first user specifying information is input, the control module 65 compares an age condition (one less than 15 years old prohibited from viewing) set in the first parentally locked program with that (17 years old) set in the first user mode, and allows playback (a playback operation) of the first parentally locked program. That is, the control module 65 allows playback (a playback operation) of a parentally locked program for an age less than the age included in the first registration information associated with the first user mode. Hence, when the first parentally locked program to be viewed is selected, the signal processor 51, graphic processor 58, audio processor 59, video processor 62, and the like play back the first parentally locked program, and the video display unit 14 displays the first parentally locked program. In this case, the digital television broadcast receiver 100 plays back the first parentally locked program based on a volume and image quality (playback conditions C1) designated by the first user mode (user mode U1) (BLOCK 4 in FIG. 3B).

When the user selects the second parentally locked program to be viewed from, for example, the electronic program guide via the operation unit 16 or remote controller 17 while the digital television broadcast receiver 100 is set in the first user mode (set age = 17 years old), the control module 65 compares an age condition (one less than 18 years old prohibited from viewing) set in the second parentally locked program with that (17 years old) set in the first user mode, and does not allow playback (a playback operation) of the second parentally locked program. That is, the control module 65 does not allow playback (a playback operation) of a parentally locked program for an age not less than the age included in the first registration information associated with the first user mode. Hence, even when the second parentally locked program to be viewed is selected, the second parentally locked program is neither played back nor displayed (BLOCK 5 in FIG. 3B).

Note that the control module 65 maintains the first user mode unless it receives any change instruction (release instruction) of the first user mode while the first user mode is set, that is, in a state after the first user specifying information is input. For example, when the control module 65 receives a change instruction from the first user mode to the fourth user mode, it changes the first user mode to the fourth user mode.

While the first user mode is maintained, the control module 65 allows playback (a playback operation) of a plurality of parentally locked programs for an age less than the age or updated age included in the first registration information associated with the first user mode. That is, when a plurality of first parentally locked programs to be viewed are selected in turn while the first user mode is maintained, playback (playback operation) of the plurality of selected first parentally locked programs is allowed. Every time the first parentally locked program to be viewed is selected, the user need not input the first user specifying information.

For example, when the user calls the mode selection screen shown in FIG. 2 and selects the icon of the fourth user mode (user mode U4) on the mode selection screen via the operation unit 16 or remote controller 17 while the first user mode is set, the control module 65 prompts the user to input the fourth user specifying information (password PW4) associated with the fourth user mode. When the user inputs the fourth user specifying information (password PW4) associated with the fourth user mode via the operation unit 16 or remote controller 17, the control module 65 changes the first user mode to the fourth user mode in response to the input of the fourth user specifying information associated with the fourth user mode, and sets the fourth user mode (BLOCK 6 in FIG. 3B).

When the user selects the first parentally locked program to be viewed from, for example, the electronic program guide via the operation unit 16 or remote controller 17 while the fourth user mode is set, that is, in a state after the fourth user specifying information is input, the control module 65 compares an age condition (one less than 15 years old prohibited from viewing) set in the first parentally locked program with that (for example, 30 years old) set in the fourth user mode, and allows playback (a playback operation) of the first parentally locked program. That is, after the fourth user specifying information is input, the control module 65 allows playback of a parentally locked program for an age less than the age or updated age included in the fourth registration information. Hence, when the first parentally locked program to be viewed is selected, the signal processor 51, graphic processor 58, audio processor 59, video processor 62, and the like play back the first parentally locked program, and the video display unit 14 displays the first parentally locked program. In this case, the digital television broadcast receiver 100 plays back the first parentally locked program based on a volume and image quality (playback conditions C4) designated by the fourth user mode (user mode U4) (BLOCK 7 in FIG. 3B).

When a plurality of first parentally locked programs to be viewed are selected in turn while the fourth user mode is maintained, playback (playback operation) of the plurality of selected first parentally locked programs is allowed. Every time the first parentally locked program to be viewed is selected, the user need not input the fourth user specifying information.

Operation control after the control module 65 automatically updates the age (17 years old) of the first registration information associated with the first user mode will be described below. After the automatic update processing, the normal mode, first user mode (user mode U1), second user mode (user mode U2), third user mode (user mode U3), and fourth user mode (user mode U4) will be assumed, as shown in FIG. 4A.

While the digital television broadcast receiver 100 is set in the first user mode (updated set age = 18 years old), when the user selects the first parentally locked program to be viewed from, for example, the electronic program guide via the operation unit 16 or remote controller 17, the control module 65 compares an age condition (one less than 15 years old prohibited from viewing) set in the first parentally locked program with that (18 years old) set in the first user mode, and allows playback (a playback operation) of the first parentally locked program. That is, the control module 65 allows playback (a playback operation) of a parentally locked program for an age less than the updated age included in the first registration information associated with the first user mode. In this case, the digital television broadcast receiver 100 plays back the first parentally locked program based on a volume and image quality (playback conditions C1) designated by the first user mode (BLOCK 4 in FIG. 4B).

When the user selects the second parentally locked program to be viewed from, for example, the electronic program guide via the operation unit 16 or remote controller 17 while the digital television broadcast receiver 100 is set in the first user mode (updated set age = 18 years old), the control module 65 compares an age condition (one less than 18 years old prohibited from viewing) set in the second parentally locked program with that (18 years old) set in the first user mode, and also allows playback (a playback operation) of the second parentally locked program. That is, the control module 65 allows playback (a playback operation) of a parentally locked program for an age less than the updated age included in the first registration information associated with the first user mode. In this case, the digital television broadcast receiver 100 plays back the second parentally locked program based on a volume and image quality (playback conditions C1) designated by the first user mode (BLOCK 5' in FIG. 4B).

Furthermore, the digital television broadcast receiver 100 can also control playback of parentally locked programs recorded in the internal HDD 101 or external HDD 102, and can also control recording of parentally locked programs in the internal HDD 101 or external HDD 102 in the same manner as described above. Moreover, the digital television broadcast receiver 100 can control reception of parentally locked programs in the same manner as described above.

In addition, the digital television broadcast receiver 100 can also control playback and recording of 3D (3-dimensional) programs based on a parental lock condition of 3D images (to be referred to as a 3D parental lock condition hereinafter) and an age or updated age included in registration information in the same manner as described above. For example, the nonvolatile memory 68 stores settings of the 3D parental lock condition (for example, one less than 18 years old prohibited from viewing). While the digital television broadcast receiver 100 is set in the first user mode (set age = 17 years old), that is, in a state after the first user specifying information is input, when the user selects a 3D program to be viewed from the electronic program guide via the operation unit 16 or remote controller 17, the control module 65 compares the 3D parental lock condition (for example, one less than 18 years old prohibited from viewing) with an age condition (17 old years) set in the first user mode, and does not allow playback (a playback operation) of the 3D program.

After the age (17 years old) in the first registration information associated with the first user mode is updated, while the digital television broadcast receiver 100 is set in the first user mode (set age = 17 years old), that is, in a state after the first user specifying information is input, when the user selects a 3D program to be viewed from the electronic program guide via the operation unit 16 or remote controller 17, the control module 65 compares the 3D parental lock condition (for example, one less than 18 years old prohibited from viewing) with an age condition (18 old years) set in the first user mode, and allows playback (a playback operation) of the 3D program.

Furthermore, the digital television broadcast receiver 100 can control (allow/prohibit) channel scans based on a parental lock condition of channel scans (referred to as a channel scan parental lock condition hereinafter) in the same manner as described above. For example, the nonvolatile memory 68 stores the settings of the channel scan parental lock condition (for example, one less than 18 years old prohibited from making channel scans). While the digital television broadcast receiver 100 is set in the first user mode (set age = 17 years old), that is, in a state after the first user specifying information is input, when the user designates an auto channel scan mode via the operation unit 16 or remote controller 17, the control module 65 compares the channel scan parental lock condition (for example, one less than 18 years old prohibited from making channel scans) with the age condition (17 years old) set in the first user mode, and does not allow making any channel scans.

After the age (17 years old) in the first registration information associated with the first user mode is updated, while the digital television broadcast receiver 100 is set in the first user mode (set age = 17 years old), that is, in a state after the first user specifying information is input, when the user selects the channel scan mode via the operation unit 16 or remote controller 17, the control module 65 compares the channel scan parental lock condition (for example, one less than 18 years old prohibited from making channel scans) with an age condition (18 old years) set in the first user mode, and allows executing the channel scan mode. In response to this, the tuners 49, 54, and 56 start channel scans based on broadcast signals (broadcast waves), and the control module 65 sets a plurality of channels detected by the channel scans as channels to be viewed.

The case has been explained wherein the digital television broadcast receiver 100 controls a parental lock operation based on the age (initially set age) or updated age. In a case in which current date and time information cannot be acquired, it is practically preferable for the control module 65 to stop update processing of an age, and to control the parental lock operation based on the age (for example, initially set age) before the update processing is stopped. Alternatively, in the case in which current date and time information cannot be acquired, the control module 65 may stop update processing of an age, and may not accept all parental lock operations.

The case in which current date and time information cannot be acquired corresponds to, for example, a case in which neither an antenna input nor a network are connected to the digital television broadcast receiver 100. For example, this case corresponds to a case in which the user views only externally input images (package contents) using the digital television broadcast receiver 100.

This embodiment will be summarized below.

A recent broadcast receiver includes a parental lock function (viewable age limiting function). When an age of the user is set in the broadcast receiver, a program, viewing of which is limited based on the set age, can be limited from being viewed. For example, parents can limit program viewing of children.

For example, when one broadcast receiver accepts only one age setting, and a plurality of users use that broadcast receiver, age settings according to the individual users cannot be made, resulting in inconvenience. Since the digital television broadcast receiver 100 of this embodiment allows to register a plurality of user modes (father mode, mother mode, and child mode) in association with a plurality of items of registration information, the age settings according to the individual users can be made. Furthermore, the digital television broadcast receiver 100 can store registration information including an age (initially set age) and age update date (user's birthday) of the user, and updates the age based on the age update date Note that the digital television broadcast receiver 100 may hold the updated age in place of the age (initially set age) or may hold both the age (initially set age) and updated age. Thus, the digital television broadcast receiver 100 can provide the parental lock function (broadcast viewable age limiting function) according to the current age of each user. Note that the digital television broadcast receiver 100 can also provide the parental lock function (broadcast viewable age limiting function) according to the initially set age depending on circumstances.

According to at least one embodiment, an operation control apparatus and operation control method which can obviate the need for updating a set age can be provided.

## Claims

1. An operation control apparatus **characterized by** comprising:
a memory (68) configured to store a plurality of items of registration information each including user specifying information, an age, and an age update date;
an update module (65) configured to update an age included in first registration information based on an age update date included in the first registration information; and
a controller (65) configured to control a parental lock operation based on an updated age included in the first registration information after first user specifying information included in the first registration information is input.

2. The apparatus of Claim 1, **characterized in that** the controller is configured to allow playback of a parentally locked program for an age less than the updated age included in the first registration information after the first user specifying information is input.

3. The apparatus of Claim 1 or 2, **characterized in that** the controller is configured to allow playback of a plurality of parentally locked programs for an age less than the updated age included in the first registration information during a period after the first user specifying information is input until another user specifying information is input.

4. The apparatus of Claim 1 or 2, **characterized in that** the memory is configured to store a 3D parental lock condition setting, and
the controller is configured to control playback of a 3D program based on the 3D parental lock condition and the updated age included in the first registration information after the first user specifying information is input.

5. The apparatus of Claim 1 or 2, **characterized by** comprising:
a receiver (48) configured to receive broadcast waves,
wherein the controller is configured to control channel scans of the broadcast waves based on the updated age included in the first registration information after the first user specifying information is input.

6. The apparatus of Claim 1 or 2, **characterized in that** the update module is configured to receive current date and time information and to update the age included in the first registration information based on the current date and time information and the age update date included in the first registration information.

7. The apparatus of Claim 6, **characterized in that** the controller is configured to stop updating of the age included in the first registration information when the current date and time information fails to be received, and to control the parental lock operation based on the age included in the first registration information after the first user specifying information is input.

8. An operation control apparatus **characterized by** comprising:
a memory (68) configured to store registration information including user specifying information, an age, and an age update date;
an update module (65) configured to update the age included in the registration information based on the age update date included in the registration information; and
a controller (65) configured to allow a parental lock operation based on an updated age included in the registration information after the user specifying information included in the registration information is input.

9. An operation control method **characterized by** comprising:
updating an age included in first registration information based on an age update date included in the first registration information of a plurality of items of registration information each including user specifying information, an age, and an age update date; and
controlling a parental lock operation based on an updated age included in the first registration information after first user specifying information included in the first registration information is input.
